**Europäisches Patentamt**

**European Patent Office**

**Office européen des brevets**

⑩

(11) Publication number: **0 146 568**
**B1**

(12) # EUROPEAN PATENT SPECIFICATION

(45) Date of publication of patent specification: **28.11.90**

(21) Application number: **84901941.9**

(22) Date of filing: **24.05.84**

(86) International application number:
**PCT/AU84/00092**

(87) International publication number:
**WO 84/04794 06.12.84 Gazette 84/28**

(51) Int. Cl.⁵: **F 16 K 5/06, F 16 K 5/08,
F 16 K 5/20, F 16 K 1/226**

(54) **A VALVE SEAL SUITABLE FOR CRYOGENIC SERVICE.**

(30) Priority: **31.05.83 AU 9616/83**

(43) Date of publication of application:
**03.07.85 Bulletin 85/27**

(45) Publication of the grant of the patent:
**28.11.90 Bulletin 90/48**

(84) Designated Contracting States:
**AT BE CH DE FR GB LI LU NL SE**

(56) References cited:
| | |
|---|---|
| **AU-B-1 422 770** | **GB-A-1 525 193** |
| **AU-B-2 699 967** | **GB-A-1 546 621** |
| **AU-B-3 368 968** | **GB-A-1 556 689** |
| **AU-B-4 923 264** | **GB-A-1 576 020** |
| **AU-B-5 917 965** | **GB-A-1 599 135** |
| **DE-A-1 550 231** | **US-A-3 118 650** |
| **DE-A-2 054 045** | **US-A-3 233 862** |
| **DE-A-2 150 628** | **US-A-3 399 863** |
| **FR-A-1 586 335** | **US-A-4 220 172** |
| **GB-A-1 009 984** | **US-A-4 247 080** |

(73) Proprietor: **B.C. RICHARDS & CO. PTY. LTD.**
**288 Bilsen Road**
**Geebung, Qld 4034 (AU)**

(72) Inventor: **KING, Warrick, John**
**63 Folkstone Avenue**
**Albany Creek, QLD 4035 (AU)**
Inventor: **RICHARDS, Cecil, Graham**
**146 Kirby Road**
**Aspley QLD 4034 (AU)**

(74) Representative: **Prüfer, Lutz H., Dipl.-Phys.**
**Harthauser Strasse 25d**
**D-8000 München 90 (DE)**

Courier Press, Leamington Spa, England.

## Description

This invention is concerned with a ball valve according to the preamble of claim 1.

One of the main difficulties facing a valve manufacturer is the design of valve seals for a variety of different valve types and for operation under widely differing conditions. Although the present invention will be described with reference to a "floating" ball valve, it will be readily apparent that with suitable modifications, it is applicable to other types of valves.

In "floating" ball valves the ball member "floats" within the valve housing and is supported by opposed annular seals for at least limited axial movement between opposed valve seats under the influence of fluid pressure. With the valve ball in the closed position the ball is forced against the seat downstream of the pressure source. A flexible seal associated with the seat is provided to prevent leakage of fluid between the valve seat and the ball as a result of wear or imperfect machining between those surfaces. Usually sealing is effected by resiliently biassing the seal against the ball i.e. by an annual metal spring or by utilizing a resilient seal material.

From the DE—A—1 550 231 an annular seal is known which comprises a generally cylindrical member having resilience in an axial direction by means of a bellow shaped wall and radial resilience by means of axially oriented notches at one end of the seal member. Radial resilience is required to achieve a seal against the valve housing. This will cause binding between the seal and the valve bore thereby negating the axial resilience necessary to maintain the seal between the seal lip and the surface of the valve ball. Under cryogenic service conditions substantial differential shrinkage occurs between metal and synthetic plastics components. Therefore the seal would be ineffective in maintaining a seal between the sealing ring and the valve body.

From the FR—A—1 586 355 a seal configuration is known which has slotted apertures on opposite sides of the seal. The seal has a certain elasticity in the axial direction and enables the pressurized fluid to act upon the walls of the internal fillets. The seal is somewhat compressible. Furtheron, the seal includes an O-ring to provide a fluid seal between the seal member and the valve body. Under cryogenic service conditions differential contractions would cause failure of the fluid seal between the seal member and the body.

From the DE—A—2 150 628 a seal member is known which is suitable for low pressures and low to medium diameter ball valves. A rear flange must be sealingly engaged between the surfaces of a stepped portion in the valve body. Under cryogenic service conditions differential shrinkage between the valve body and the sealing member would decrease the sealing properties of this seal member.

Generally speaking, for most general service valves, creation of an adequate seal is not greatly difficult. Difficulties do arise however when valves are required, for special service applications such as cryogenic service. Cryogenic service valves are required to operate at temperatures between ambient and −196°C but more usually in the range −50°C to −196°C. Under these extreme conditions the valves are expected to give reliable trouble free operation over extended periods of use.

Polytetrafluoroethylene (PTFE) is a widely used resilient valve seal material due to its chemical inertness and ability to operate over a wide temperature range. Its low friction characteristics make it very suitable as a seal material as it does not retard valve operation due to friction between the ball and the seal. PTFE however is subject to a plastic deformation known as "creep" or "cold flow" which over a period causes a reduction in resilient memory and ultimately permits valve leakage.

It is an object of the present invention to overcome or alleviate the problems of prior art valve seals an to provide a simple and inexpensive valve seal design suitable for a wide range of valves and operating conditions, and in particular for cryogenic service conditions.

According to the invention there is provided a ball valve which is characterized by the features of claim 1.

Preferably said sealing member includes a least two recessed portions arranged substantially normal to the deformation axis.

Preferably at least two recessed portions are formed in opposed directions.

Preferably said sealing member comprises a hollow body with recessed portions formed on inner and outer surfaces.

Preferably said recessed portions comprise recessed channels.

Preferably said sealing member comprisses an annular member adapted to form a fluid seal in a ball valve.

Preferably said sealing member includes a sealing surface on a portion of said body which is not able to undergo resiliently flexible deformation under conditions of use.

Preferably locating means includes a ramped surface on an inflexible portion of said sealing member, said ramped surface adapted to engage a complementary surface on said one of said valve members.

Preferably biassing means includes a resilient biassing means.

Preferably said biassing means includes a transmission member to transmit to said second sealing surface a biassing force from said biassing means located adjacent said first sealing surface.

Preferred embodiments of the invention will now be described with reference to the accompanying drawings in which:

FIG. 1 shows an exploded view of a general service ball valve incorporating one embodiment of the invention.

FIG. 2 shows an assembled view of a cryogenic service ball valve in an assembled state.

FIG. 3 shows an enlarged portion of the valve ball of FIG. 2 with a cross sectional view of the sealing member in an undeformed state.

FIG. 4 shows the sealing member of FIG. 3 in a deformed operational state.

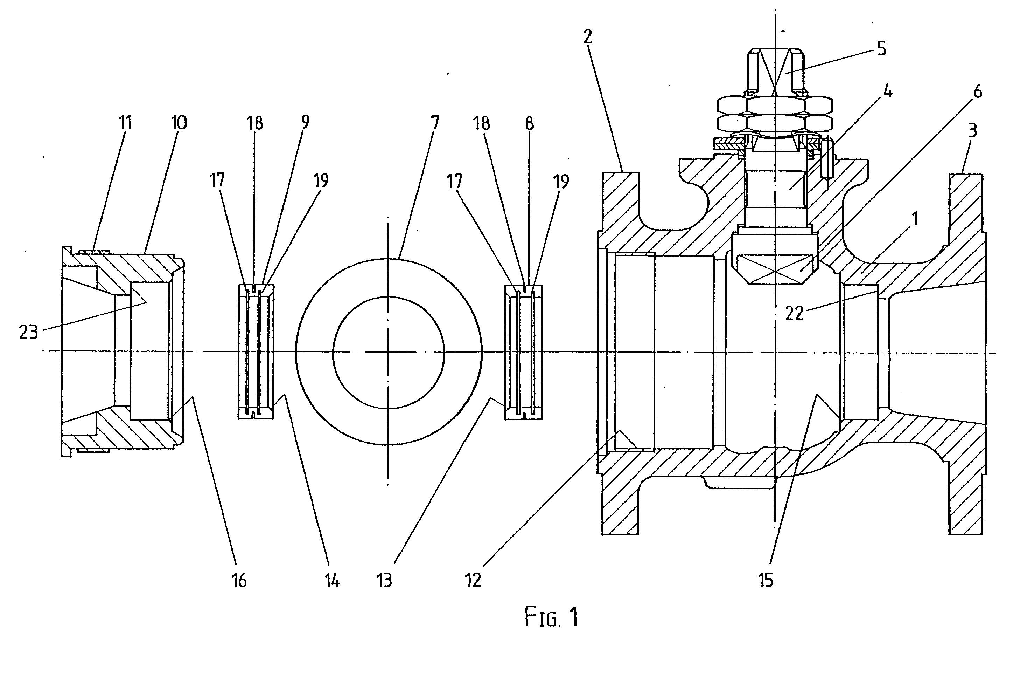

In FIG. 1 the general service valve comprises a body 1 with opposed flanges 2 and 3 with an operating spindle 4. The head 5 of spindle 4 is provided with an appropriately shaped end to receive a spindle extension (not shown) or an operating lever (also not shown). Preferably the head 5 of spindle 4 is generally cylindrical with a pair of opposed flat surfaces formed therein. Alternatively the spindle 4 my be formed with a cylindrical head having a keyway therein. The inner end of spindle 4 is provided with an engaging tip 6 for actuation of ball 7. Ball 7 includes an aperture 7a to enable passage of a fluid therethrough when the ball is in the open position. Body 1 is formed as a single casting and the operative surfaces are machined as required.

The valve is assembled by first inserting through the aperture in flange 2 first seal 8, ball 7 followed by second seal 9 and finally insert portion 10. Insert 10 is retained within body 1 by a screw threaded engagement between threaded portion 11 and a corresponding threaded portion 12 in body 1.

In this manner ball 7 may be located as a "floating" ball between a primary seat formed by sealing surfaces 13 and 14 on seals 8 and 9 respectively. A secondary seat is formed by surface 15 within body 1 and surface 16 on insert 10.

FIG. 2 shows an assembly of a generally similar tye of ball valve to that of FIG. 1 but which is adapted for use in cryogenic service. The main difference in construction relates to the employment of an extended spindle 5a which is located within an extended bonnet 5b. As illustrated, the tip 6 of spindle 4 is enaged with ball 7. Ball 7 is shown in FIG. 2 in the closed position with aperture 7a at right angles to the flow axis of the valve.

As cryogenic valves of the type shown in FIG. 2 operate under very severe conditions such as with liquid nitrogen gas at temperatures as low as −196°C and high pressures, great care must be taken in the design of such valves and the choice of manufacturing materials to ensure reliable service. For this reason, it is preferred to construct the valve as far as possible from components made from the same materials or materials having substantially identical thermal expansion characteristics. A most preferred material for valve construction is Grade 316 stainless steel.

Valve seals 8 and 9 are preferably manufactured from PCTFE (polychlorotrifluoroethylene) marketed by Minnesota Mining and Manufacturing Company under the trade mark "KEL F". This material is a thermoplastic polymer similar in some respects to PTFE but having mechanical properties suitable for cryogenic service. PCTFE has an extremely high resistance to deformation under compressive loads. Under applied pressures of 8000 psi for sustained periods, a permanent set (deformation) of no greater than 4—5% can be measured. At very low temperatures approaching −200°C this material has good elastic memory and recovers rapidly from flexure on load release without cracking. Although PCTFE is a preferred material for valve seals according to the invention, any other material having similar physical and chemical properties would be suitable.

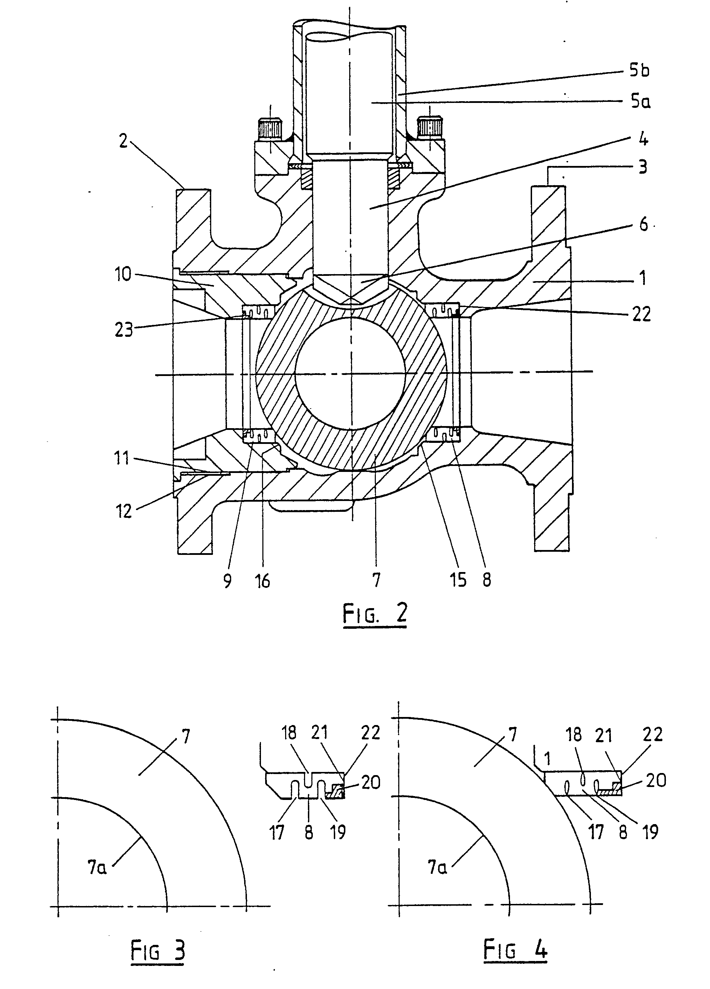

Unlike most resilient polymers, PCTFE is substantially incompressible and thus it is not possible to use a simple annular sealing ring under compression to obtain a resiliently biassed seal. To overcome this difficulty opposed annular channels 17, 18 and 19 are formed in the inner and outer walls of seals 8 and 9. The bottom or floor of the opposed channels 17, 19 and 18 respectively overlap to give an annular region of discontinuous integrity in the body of the seals 8 and 9. Figure 3 shows an enlarged cross sectional view of seal 8 before assembly of the valve. In this view an optional retaining ring 20 is shown. This ring may be used in large valve seals to prevent distortion of the seal under excess pressures.

In FIG. 4 it can be seen how seal 8 distorts under load when the valve is assembled. Because of the overlapping nature of channels 17, 18 and 19 the body of seal 8 "concertinas" under pressure. The elastic memory of the PCTFE seal material and its ability to flex at low temperatures thus provides a resilient bias which urges seal face 13 into sealing engagement with ball 7 and at the same time urges rear seal face 21 into sealing engagement with wall 23 of the seal pocket in body 1. A similar pocket in insert 10 has a wall 23 for sealing engagement with the rear wall of seal 9.

Accordingly it can be seen that although the PCTFE is substantially incompressible, an analogous state of affairs can be achieved by virtue of the overlapping opposed channels. When body insert 10 is fully inerted into the body, a substantial pressure is created between ball 7 and seal faces 13 and 14 as well as between the rear walls of seals 8 and 9 and seal pocket walls 22 and 23 respectively to prevent fluid leakage. Notwithstanding this substantial pressure between seal faces 13 and 14 and ball 7, the friction properties of PCTFE are such that the valve is easily operated without excessive spindle torque.

The present invention enables the use of a "soft" valve seat for high pressure applications (an in particular cryogenic service) without the valve seat undergoing plastic deformation leading to leakage.

Although the present invention has been described with reference to the valve seats of "floating" ball valves, it will be readily apparent that it is equally applicable to trunnion ball valves and other types of valve seals.

In addition, the seals are suitable for a wide range of pressures (both liquid and gas) over a temperature range from around −200°C to greater than ambient.

It will be readily apparent to a skilled addressee that many modifications and variations may be made to the invention without departing from the scope of the claims.

**Claims**

1. A ball valve for cryogenic service conditions comprising: a valve body (1) having an axial bore therethrough; a ball-shaped valve member (7) located within said valve body, said valve member (7) having a bore therethrough alignable with the bore in the valve body for conduction of fluid therethrough; and sealing means (8, 9) disposed between said ball-shaped valve member (7) and said valve body (1), said sealing means (8, 9) comprising an annular body extending radially with respect to the axis of the bore through the valve body (1) to engage the valve member (7) on the opposite sides of the axial bore. The annual body of the sealing means (8, 9) having a wall member which in cross section defines

(a) radially inner and outer wall surfaces spaced radially from the axis of the bore, said radially inner and outer wall surfaces extending generally axially with respect to the axis through the bore,

(b) a tapered axially inner sealing face (13, 14) adapted to engage said valve member (7) for sealing engagement therewith and

(c) means to achieve sealing between said sealing means (8, 9) and said valve body (1) opposite said valve member (7), said sealing means (8, 9) including at least one continuous slotted recess (17, 18, 19) in each of said radially inner and outer wall surfaces wherein said slotted recesses (17, 18, 19) in the radially inner and outer wall surfaces are spaced apart axially with respect to the axis of said bore, characterized in that said sealing means (8, 9) is comprised of a low friction synthetic material which is substantially incompressible under cryogenic service conditions, said slotted recesses (17, 18, 19) consisting of grooves with upright walls, the width of said grooves being thinner than the radial wall thickness of said sealing means (8, 9) said sealing means (8, 9) being located between said valve member (7) and a radial step (22, 23) integral with an insert body (10) and facing said valve member (7) in said valve body (1) under axial compression, whereby axially opposed walls of each slotted recess thereof are axially deformed to resiliently bias the opposite sealing faces into sealing engagement with said valve member (7) and said radial step (22, 23) at the same time, said sealing means (8, 9) being freely slidable within said valve body (1).

2. A ball valve as claimed in claim 1 wherein a plurality of spaced continuous slotted recesses (17, 18, 19) are formed in each said radially inner and outer wall surfaces of said sealing means (8, 9).

3. A ball valve as claimed in claim 2 wherein said slotted recesses (17, 18, 19) are formed in respective planes normal to a central axis of said sealing means (8, 9).

4. A ball valve as claimed in claim 3 wherein axially adjacent slotted recesses (17, 18, 19) are alternatively formed in respective radially inner and outer wall surfaces of said sealing means (8, 9), said slotted recesses (17, 18, 19) extend from respective radially inner and outer wall surfaces of said sealing means (8, 9) by a distance greater than one half of the distance between said radially inner wall surface and said radially outer wall surface, and each slotted recess (17, 18, 19) has a substantially U-shaped cross section with spaced parallel walls joined by a convexly curved floor.

5. A ball valve as claimed in one of claims 1 to 4 wherein an annular metal support member (20) is located adjacent said axially outer support face to support said sealing means (8, 9) against radial deformation.

6. A ball valve as claimed in claim 5 wherein said metal support member (20) comprises an axially extending flange and a radially extending flange, said radially extending flange abutting on the radial step (22, 23) in said valve body (1).

**Patentansprüche**

1. Kugelventil für kryogene Betriebsbedingungen mit: einem Ventilgehäuse (1) mit einer axialen Bohrung dadurch; einem in dem Ventilgehäuse angeordneten kugelförmigen Ventilteil (7), das eine mit der Bohrung in dem Ventilkörper ausrichtbare Bohrung dadurch zum Leiten von Fluid dadurch aufweist; und einer zweischen dem kugelförmigen Ventilteil (7) und dem Ventilgehäuse (1) vorgesehenen Abdichtungsvorrichtung (8, 9), die einem sich radial in bezug auf die Achse der Bohrung durch das Ventilgehäuse (1) erstreckenden ringförmigen Körper zum Angreifen an das Ventilteil (7) auf den entgegengesetzten Seiten der axialen Bohrung aufweist, wobei der ringförmige Körper der Abdichtvorrichtung (8, 9) ein Wandteil aufweist, das im Querschnitt definiert

(a) eine in einem radialen Abstand von der Achse der Bohrung angeordnete radial innere und äußere Wandoberfläche, die sich im allgemeinen axial in bezug auf die Achse durch die Bohrung erstreckt,

(b) eine axial angeschrägte, zum Angreifen an das Ventilteil (7) geeignete innere Dichtungsfläche (13, 14) zum dichtenden Angreifen an das Ventilteil und

(c) eine Einrichtung zum Bewirken der Dichtung zwischen der Abdichtvorrichtung (8, 9) und dem Ventilgehäuse (1) gegenüber dem Ventilteil (7), wobei die Abdichtvorrichtung mindestens eines kontinuierliche gekerbte Ausnehmung (17, 18, 19) in jeder der radial inneren und äußeren Wandoberflächen aufweist und die gekerbten Ausnehmungen (17, 18, 19) in der radial inneren und äußeren Wandoberfläche axial in bezug auf die Achse der Bohrung in einem Abstand voneinander angeordnet sind, dadurch gekennzeichnet, daß die Abdichtvorrichtung (8, 9) aus einem synthetischen Material niedriger Reibung besteht, das im wesentlichen inkompressibel unter kryogenen Betriebsbedingungen ist, die gekerbten Ausnehmungen (17, 18, 19) aus Rillen mit aufrechten Wänden bestehen, wobei die Breite der Rillen geringer als die Dicke der radialen Wand der Abdichtvorrichtung (8, 9) ist, die Abdichtvorrichtung (8, 9) zwischen dem Ventilteil (7) und einer einstückig mit einem Einsetzkörper (10) gebildeten radialen Stufe (22, 23) angeordnet ist und dem Ventilteil (7) in dem Ventilgehäuse (1) unter axialem Druck zugewandt ist, wodurch axial sich gegenüberstehende Wände jeder gekerbten Ausnehmung davon axial deformiert sind zum federnden Vorspannen der entgegengesetzten dichtenden Flächen in dichtendem Eingriff mit dem Ventilteil (7) und der radialen Stufe zur gleichen Zeit, wobei die Abdichtvorrichtung (8, 9) frei verschiebbar in dem Ventilgehäuse (1) ist.

2. Kugelventil nach Anspruch 1, bei dem eine Mehrzahl von kontinuierlichen gekerbten Ausnehmungen (17, 18, 19) in einem Abstand voneinander in jeder radial inneren und äußeren Wandoberfläche der Abdichtvorrichtung (8, 9) gebildet ist.

3. Kugelventil nach Anspruch 2, bei dem die gekerbten Ausnehmungen (17, 18, 19) in entsprechenden Ebenen senkrecht zu einer Mittelachse der Abdichtvorrichtung (8, 9) gebildet sind.

4. Kugelventil nach Anspruch 3, bei dem axial benachbarte gekerbte Ausnehmungen (17, 18, 19) abweschselnd auf der entsprechenden radial inneren und äußeren Wandoberfläche der Abtastvorrichtung (8, 9) gebildet sind, die gekerbten Ausnehmungen (17, 18, 19) sich von der entsprechenden radial inneren und äußeren Wandoberfläche der Abdichtvorrichtung (8, 9) um einen Abstand größer als die Hälfte des Abstandes zwischen der radial inneren Wandoberfläche und der radial äußeren Wandoberfläche erstrecken und jede gekerbte Ausnehmung (17, 18, 19) im wesentlichen einen U-förmigen Querschnitt aufweist, wobei die im Abstand voneinander angeordneten parallelen Wände durch einen konvex gebogenen Boden verbunden sind.

5. Kugelventil nach einem der Ansprüche 1 bis 4, bei dem ein ringförmiges metallisches Stützteil (20) benachbart zu der axial äußeren Stützfläche zum Stützen der Abdichtvorrichtung (8, 9) gegen eine radiale Deformation vorgesehen ist.

6. Kugelventil nach Anspruch 5, bei dem das metallische Stützteil (20) einen sich axial erstreckenden Flansch und einen sich radial erstreckenden Flansch aufweist, wobei der sich radial erstreckende Flansch gegen die radiale Stufe (22, 23) in dem Ventilgehäuse (1) stößt.

**Revendications**

1. Vanne à obturateur sphérique pour conditions d'utilisation cryogéniques, comprenant un corps de vanne (1) à perçage axial; un élément obturateur sphérique (7) placé dans ledit corps de la vanne, ledit élément obturateur (7) étant traversé par un perçage qui peut être aligné avec le perçage du corps de la vanne pur conduire le fluide à travers la vanne; et des moyens d'étanchéité (8, 9) disposés entre ledit élément obturateur sphérique (7) et ledit corps (1) de la vanne, lesdits moyens d'étanchéité (8, 9) comprenant un corps annulaire disposé radialement par rapport à l'axe du perçage qui traverse le corps (1) de la vanne pour s'appuyer sur l'élément obturateur (7) sur les deux côtés opposés du perçage axial, le corps annulaire des moyens d'étanchéité (8, 9) possédant un élément de paroi qui, en section transversale, définit

(a) des surfaces de parois radialement intérieure et radialement extérieure espacées radialement de l'axe du perçage, lesdites surfaces de paroi radialement intérieure et radialement extérieure s'étendant sensiblement axialement par rapport à l'ace du perçage;

(b) une face d'étanchéité axialement intérieure (13, 14) à section décroissante adaptée pour s'appuyer sur ledit élément obturateur (7) pour former un joint étanche avec cet élément et

(c) des moyens pour établir un joint étanche entre lesdits moyens d'étanchéité (8, 9) et ledit corps (1) de la vanne à l'opposé dudit élément obturateur (7), lesdits moyens d'étanchéité (8, 9) comprenant au moins une fente continue (17, 18, 19) dans chacune desdites surfaces de paroi radialement intérieure et radialement extérieure, lesdites fentes (17, 18, 19) formées dans les surfaces des parois radialement intérieure et radialement extérieure étant espacées axialement sur la longueur de l'axe dudit perçage, caractérisée en ce que lesdits moyens d'étanchéité (8, 9) sont composés d'une matière synthétique à faible coefficient de frottement qui est sensiblement incompressible dans les conditions d'utilisation cryogéniques, lesdites fentes (17, 18, 19) étant constituées par des gorges à parois verticales, la largeur desdites gorges étant inférieure à l'épaisseur radiale de la paroi desdits moyens d'étanchéité (8, 9) lesdits moyens d'étanchéité (8, 9) étant placés sous compression axiale entre ledit élément obturateur (7) et un épaulement radial (22, 23) formé dans un corps rapporté (10) et qui regarde vers ledit élément obturateur (7) dans ledit corps (1) de la vanne, de sorte que les parois axialement opposées de chacune de leurs fentes se déforment axialement pour tendre à appliquer élastiquement les faces d'étanchéité opposées simultanément en contact à joint étanche sur ledit élément obturateur (7) et sur ledit épaulement radial (22, 23), lesdits moyens d'étanchéité (8, 9) pouvant coulisser librement dans ledit corps (1) de la vanne.

2. Vanne à obturateur sphérique selon la revendication 1, dans laquelle une pluralité de fentes continues espacées (17, 18, 19) sont formées dans chacune desdites surfaces de parois radialement intérieure et radialement extérieure desdits moyens d'étanchéité (8, 9).

3. Vanne à obturateur sphérique selon la revendication 2, dans laquelle lesdites fentes (17, 18, 19) sont formées dans des plans respectifs perpendiculaires à un axe central desdits moyens d'étanchéite (8, 9).

4. Vanne à obturateur sphérique selon la revendication 3, dans laquelle les fentes (17, 18, 19) qui sont axialement adjacentes sont formées en alternance dans les surfaces de parois respectivement radialement intérieure et radialement extérieure desdits moyens d'étanchéite (8, 9), lesdites fents (17, 18, 19) s'étendent à partir desdites surfaces de paroi respectivement radialement intérieure et radialement extérieure desdits moyens d'étanchéité (8, 9) sur une distance supérieure à la moitié de la distance comprise entre ladite surface de paroi radialement intérieure et ladite surface radialement extérieure, et chaque fente (17, 18, 19) possède une section sensiblement en forme de U, avec des parois parallèles espacées raccordées par un fond à coubure convexe.

5. Vanne à obturateur sphérique selon l'une quelconque des revendications 1 à 4, dans laquelle un élément de renfort métallique annulaire (20) est placé adjacent à ladite face d'appui axialement extérieure pour renforcer lesdits moyens d'étanchéité (8, 9) contre la déformation radiale.

6. Vanne à obturateur sphérique selon la revendication 5, dans laquelle ledit élément de renfort métallique (20) comprend un collet s'étendant axialement et un collet s'étendant radialement, ledit collet s'étendant radialement butant contre l'épaulement radial (22, 23) formé dans ledit corps (1) de la vanne.

FIG. 1

EP 0 146 568 B1

FIG. 2

FIG 3

FIG 4